(19) Europäisches Patentamt
European Patent Office
Office européen des brevets

(11) **EP 2 865 084 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(21) Anmeldenummer: **13719293.6**

(22) Anmeldetag: **24.04.2013**

(51) Int Cl.:
*H02M 7/5387* (2007.01)　　*H02M 1/00* (2006.01)
*H02P 27/08* (2006.01)　　*H02M 7/5395* (2006.01)

(86) Internationale Anmeldenummer:
**PCT/EP2013/058492**

(87) Internationale Veröffentlichungsnummer:
**WO 2013/189641 (27.12.2013 Gazette 2013/52)**

(54) **VERFAHREN UND VORRICHTUNG ZUM ANSTEUERN EINES WECHSELRICHTERS**

METHOD AND DEVICE FOR ACTUATING AN INVERTER

PROCÉDÉ ET DISPOSITIF DE COMMANDE D'UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2012 DE 102012210667**

(43) Veröffentlichungstag der Anmeldung:
**29.04.2015 Patentblatt 2015/18**

(73) Patentinhaber: **Robert Bosch GmbH**
**70442 Stuttgart (DE)**

(72) Erfinder:
• **WIECHA, Thomas**
　**71732 Tamm (DE)**
• **DAMSON, Mark**
　**70499 Stuttgart (DE)**

(56) Entgegenhaltungen:
**DE-A1-102008 040 144　　US-A- 5 631 819**

**Beschreibung**

Die vorliegende Erfindung betrifft ein Verfahren zum Ansteuern eines Wechselrichters mittels Raumzeigerpulsweitenmodulation, insbesondere zum Ansteuern einer elektrischen Maschine, wobei der Wechselrichter eine Mehrzahl von steuerbaren Schaltern aufweist und dazu ausgebildet ist, eine mehrphasige elektrische Spannung in Form eines Spannungsraumzeigers bereitzustellen, wobei die steuerbaren Schalter derart angesteuert werden, dass unterschiedliche Einschaltdauern der Schalter eingestellt und eine Mehrzahl von aufeinanderfolgenden unterschiedlichen Schaltzuständen der Schalter eingerichtet werden, um den Spannungsraumzeiger bereitzustellen.

Die vorliegende Erfindung betrifft ferner eine Vorrichtung zum Ansteuern eines Wechselrichters mittels Raumzeigerpulsweitenmodulation, insbesondere zum Ansteuern einer elektrischen Maschine, wobei der Wechselrichter eine Mehrzahl von steuerbaren Schaltern aufweist, die dazu ausgebildet sind, eine mehrphasige elektrische Spannung in Form eines Spannungsraumzeigers bereitzustellen, mit einem Steuergerät, das dazu ausgebildet ist, die steuerbaren Schalter derart anzusteuern, dass unterschiedliche Einschaltdauern der Schalter eingestellt werden und der Wechselrichter eine Mehrzahl von aufeinanderfolgenden unterschiedlichen Schaltzuständen der Schalter annimmt, um den Spannungsraumzeiger bereitzustellen.

Schließlich betrifft die vorliegende Erfindung einen Kraftfahrzeugantriebsstrang mit wenigstens einer elektrischen Maschine zum Bereitstellen von Antriebsleistung, einem Wechselrichter zum Ansteuern der elektrischen Maschine und mit einer Vorrichtung zum Ansteuern des Wechselrichters der oben beschriebenen Art.

Stand der Technik

Auf dem Gebiet der Drehstromverbraucher im Allgemeinen und der elektrischen Drehstrommaschinen im Speziellen sind unterschiedliche Ansteuerverfahren bekannt. Dabei wird aktuell üblicherweise das Verfahren der Raumzeigermodulation zum Ansteuern des Drehstromverbrauchers bevorzugt. Bei diesen Ansteuerungsverfahren wird ein Raumzeiger durch aufeinanderfolgende Einstellung von acht Grundspannungsraumzeigern gebildet. Um die Strangspannung bereitzustellen, werden die Grundspannungsraumzeiger pulsweitenmoduliert geschaltet, so dass eine entsprechende Ansteuerspannung generiert wird.

Durch begrenzte Schaltzeiten der steuerbaren Schalter des Wechselrichters ist der einstellbare Betriebsbereich bzw. der maximale Ansteuergrad des Wechselrichters begrenzt, d.h. die Zeitdauer einzelner Schaltpulse der Schalter ist auf eine minimale Zeitdauer begrenzt. Um den einstellbaren Betriebsbereich des Wechselrichters zu erhöhen bzw. einzelne Betriebsbereiche trotz der begrenzten Schaltzeiten der steuerbaren Schalter einstellen zu können, wird in der DE 10 2008 040 144 A1 vorgeschlagen, die Einschaltzeiten der steuerbaren Schalter innerhalb einer Pulsweitenmodulationsperiode jeweils um die Einschaltdauer des am kürzesten eingeschalteten Schalters zu verkürzen. Dadurch wird einer der steuerbaren Schalter über die gesamte Pulsweitenmodulationsperiode nicht eingeschaltet und die übrigen Schalter jeweils um die Einschaltdauer des am kürzesten eingeschalteten Schalters verkürzt. Dadurch wird im Ergebnis einer von zwei spannungsfrei schaltenden Schaltzuständen durch einen anderen spannungsfrei schaltenden Schaltzustand ersetzt.

Nachteilig bei diesem Verfahren ist es, dass bei bestimmten Schaltsequenzen bzw. bei Schaltfolgen der steuerbaren Schalter, bei denen die Einschaltdauer der zwei am kürzesten eingeschalteten steuerbaren Schalter eine ähnliche Dauer aufweisen, eine minimal zulässige Pulsdauer der Schalter unterschritten werden kann.

Ferner kann das oben genannte Verfahren zu einer nicht symmetrischen, insbesondere thermischen, Belastung der Leistungshalbleiterschalter und zu einer Verschiebung der mittleren Sternpunktspannung führen.

Offenbarung der Erfindung

Erfindungsgemäß wird daher ein Verfahren zum Ansteuern eines Wechselrichters mittels Raumzeigerpulsweitenmodulation der eingangs genannten Art bereitgestellt, wobei die Einschaltdauern der Schalter während einer Pulsweitenmodulationsperiode verlängert werden, sofern eine Einschaltdauer eines der Schalter während der Pulsweitenmodulationsperiode einen vordefinierten Schwellenwert unterschreitet.

Ferner wird daher erfindungsgemäß eine Vorrichtung zum Ansteuern eines Wechselrichters der eingangs genannten Art bereitgestellt, wobei das Steuergerät dazu ausgebildet ist, die Einschaltdauern der Schalter während einer Pulsweitenmodulationsperiode zu verlängern, sofern eine Einschaltdauer eines der Schalter während der Pulsweitenmodulationsperiode einen vordefinierten Schwellenwert unterschreitet.

Schließlich wird erfindungsgemäß ein Kraftfahrzeugantriebsstrang bereitgestellt mit wenigstens einer elektrischen Maschine zum Bereitstellen von Antriebsleistung und einem Wechselrichter zum Ansteuern der elektrischen Maschine und mit einer Vorrichtung zum Ansteuern des Wechselrichters der oben genannten Art.

Vorteile der Erfindung

Dadurch, dass die Einschaltdauer der Schalter verlängert wird, wenn im Allgemeinen kürzere Einschaltdauern der Schalter eingestellt werden, können unzulässig kurze Pulsdauern der Schalter vermieden werden, so dass der einstellbare Betriebsbereich erweitert werden kann. Ferner kann dadurch eine unsymmetrische, insbesondere thermische, Belastung des Wechselrichters vermieden werden.

Vorzugsweise wird die Einschaltdauer des Schalters verwendet, der eine mittlere Einschaltdauer der Schalter aufweist.

Mit anderen Worten wird die Einschaltdauer des Schalters verwendet, der die zweitlängste bzw. zweitkürzeste Einschaltdauer aufweist bzw. der weder die längste noch die kürzeste Einschaltdauer der Schalter aufweist.

Dadurch können besonders kritische Schaltsequenzen der Schalter mit einfachen Mitteln erkannt werden, bei denen es zu unzulässig kurzen Ein- oder Ausschaltzeiten kommen kann.

Vorzugsweise werden die Einschaltdauern der Schalter um eine jeweils identische Zeitdauer verlängert.

Dadurch wird der bereitgestellte Spannungsraumzeiger nicht verändert, wodurch gleichzeitig die Ansteuerung der angesteuerten Last nicht beeinflusst wird.

Es ist weiterhin bevorzugt, wenn die Einschaltdauer des Schalters mit der längsten Einschaltdauer innerhalb der Pulsweitenmodulationsperiode derart verlängert wird, dass der Schalter über die gesamte Pulsweitenmodulationsperiode eingeschaltet ist.

Dadurch kann auf einen der Nullvektoren während der gesamten Pulsweitenmodulationsperiode verzichtet werden, wodurch eine gezielte Lastverteilung in dem Wechselrichter erzielt werden kann, ohne dass die Ansteuerung der Last beeinflusst wird.

Es ist weiterhin bevorzugt, wenn die Zeitdauer, um die die Einschaltdauern der Schalter verlängert werden, der Differenz zwischen der Pulsweitenmodulationsperiodendauer und der Einschaltdauer des Schalters mit der längsten Einschaltdauer entspricht.

Dadurch können die Einschaltdauern variiert werden, ohne dass der einzustellende Spannungsraumzeiger variiert und somit die Ansteuerung der angesteuerten Last beeinträchtigt wird.

Es ist weiterhin bevorzugt, wenn die Einschaltdauer des Schalters ein Tastverhältnis des Schalters ist und der vordefinierte Schwellenwert ein Tastverhältnis von 50 % ist.

Dadurch können kritische Ansteuersequenzen, bei denen die Einschaltdauer der Schalter sich dem minimalen Ansteuergrad nähert, mit regelungstechnisch einfachen Mitteln bestimmt werden und die Ansteuerung der Schalter entsprechend angepasst werden.

Es ist weiterhin bevorzugt, wenn die Einschaltdauern der Schalter verkürzt werden, sofern die Einschaltdauer des Schalters einen zweiten vordefinierten Schwellenwert überschreitet.

Dadurch können Situationen erfasst werden, bei denen sich die Einschaltdauer der Schalter dem maximalen Ansteuergrad annähern und die Ansteuerung der Schalter entsprechend angepasst werden.

Dabei ist es weiterhin bevorzugt, wenn die Einschaltdauern der Schalter um jeweils eine identische Zeitdauer derart verkürzt werden, dass der Schalter mit der kürzesten Einschaltdauer über die gesamte Pulsweitenmodulationsperiode geöffnet ist.

Dadurch entfällt lediglich einer der Nullvektoren, wodurch der bereitgestellte Spannungsraumzeiger und die Ansteuerung der angesteuerten Last nicht beeinflusst wird.

Es ist weiterhin bevorzugt, wenn die jeweiligen Einschaltpulse der Schalter innerhalb der Pulsweitenmodulationsperiode verschoben werden, sofern die Einschaltdauer des Schalters einen vordefinierten Wertebereich zwischen dem ersten und dem zweiten Schwellenwert entspricht.

Dadurch kann in einem Übergangsbereich von einer Ansteuersituation zu einer anderen Ansteuersituation ein Mindestabstand zwischen zwei Schaltvorgängen gewährleistet werden und somit die Einschaltdauer oder Ausschaltdauer der Schalter die Grenzen des Ansteuergrades nicht überschreiten.

Es ist weiterhin bevorzugt, wenn der erste und der zweite Schwellenwert identisch sind.

Dadurch kann mit einfachen Mitteln der Übergang zwischen der Verkürzung der Einschaltdauer und der Verlängerung der Einschaltdauer gebildet werden.

Dabei ist es besonders bevorzugt, wenn die Einschaltpulse der Schalter an ein Ende der Pulsweitenmodulationsperiode verschoben werden, sofern die Einschaltdauer von einem Wert größer als der erste Schwellenwert zu einem Wert kleiner als der erste Schwellenwert geändert wird.

Dadurch kann ein Übergang zu einem dauerhaften Einschalten eines der Schalter mit einfachen Mitteln gebildet werden.

Es ist weiterhin bevorzugt, wenn die Einschaltpulse der Schalter an einen Anfang der Pulsweitenmodulationsperiode verschoben werden, sofern die Einschaltdauer des Schalters von einem Wert kleiner als der zweite Schwellenwert zu einem Wert größer als der zweite Schwellenwert verändert werden.

Dadurch kann ein Übergang von einer Pulsweitenmodulationsperiode, in der einer der Schalter dauerhaft eingeschaltet ist, zu einer Pulsweitenmodulationsperiode, in der einer der Schalter dauerhaft ausgeschaltet ist, eingestellt werden, wodurch die Einschaltdauern und Ausschaltdauern der Schalter keinen unzulässigen Wert überschreiten.

Es ist besonders bevorzugt, wenn in genau einer Pulsweitenmodulationsperiode die Einschaltpulse der Schalter verschoben werden, um die Einschaltpulse an die entsprechende vorausgehende Pulsweitenmodulationsperiode und die nachfolgende Pulsweitenmodulationsperiode anzupassen.

Es ist weiterhin bevorzugt, wenn die Einschaltpulse der jeweiligen Schalter geteilt werden und die geteilten Einschaltpulse jeweils an den Anfang und an das Ende der Pulsweitenmodulationsperiode verschoben werden.

Dadurch können die Pulsweitenmodulationsperioden jeweils mit einem Nullspannungszeiger beginnen und enden.

Im Ergebnis kann durch die vorliegende Erfindung der einstellbare Betriebsbereich vergrößert werden, da Schaltzustände mit unzulässigen Einschalt- oder Ausschaltdauern durch Schaltsequenzen ersetzt werden, die einen identischen Spannungsraumzeiger einstellen. Ferner kann durch die Variation der Einschaltdauern und insbesondere durch die Variation der spannungsfrei schaltenden Schaltzustände bzw. der Nullvektoren der Wechselrichter im Allgemeinen symmetrischer belastet werden.

Es versteht sich, dass Merkmale, Eigenschaften und Vorteile des erfindungsgemäßen Verfahrens auch entsprechend auf die erfindungsgemäße Vorrichtung zutreffend bzw. anwendbar sind.

Kurze Beschreibung der Zeichnungen

Fig. 1 zeigt in schematischer Form einen Wechselrichter zum Ansteuern einer elektrischen Maschine;

Fig. 2 zeigt ein komplexes Zeigerdiagramm zur Erläuterung eines Raumzeigermodulationsverfahrens zum Ansteuern eines Wechselrichters;

Fig. 3 zeigt in schematischer Form einen Verlauf von drei Strangspannungen zum Einstellen unterschiedlicher Spannungsraumzeiger;

Fig. 4 zeigt in schematischer Form den Verlauf von drei Strangspannungen einer Pulsweitenmodulationsperiode, bei der einer der steuerbaren Schalter dauerhaft ausgeschaltet ist;

Fig. 5 zeigt in schematischer Form den Verlauf von drei Strangspannungen, bei denen ein minimaler Ansteuerungsgrad erreicht wird;

Fig. 6 zeigt in schematischer Form den Verlauf von drei Strangspannungen innerhalb einer Pulsweitenmodulationsperiode, in der einer der steuerbaren Schalter dauerhaft eingeschaltet ist;

Fig. 7 zeigt in schematischer Form ein komplexes Zeigerdiagramm zur Erläuterung von unterschiedlichen Ansteuerungsbereichen der Raumzeigermodulation;

Fig. 8a, b zeigt in schematischer Form drei Strangspannungen innerhalb einer Pulsweitenmodulationsperiode, mit einem mittleren Tastverhältnis größer als 50 %;

Fig. 9a, b zeigt in schematischer Form drei Strangspannungen innerhalb einer Pulsweitenmodulationsperiode mit einem mittleren Tastverhältnis von weniger als 50 %;

Fig. 10a, b zeigt in schematischer Form drei Strangspannungen innerhalb einer Pulsweitenmodulationsperiode bei denen die Spannungspulse an den Anfang und an das Ende der Pulsweitenmodulationsperiode verlagert sind;

Fig. 11a, b zeigt in schematischer Form drei Strangspannungen innerhalb einer Pulsweitenmodulationsperiode in einem Übergangsbereich der Ansteuerung des Wechselrichters; und

Fig. 12a, b zeigt in schematischer Form den Verlauf von drei Strangspannungen innerhalb einer Pulsweitenmodulationsperiode in einem Übergangsbereich zwischen zwei Ansteuerarten des Wechselrichters.

Ausführungsformen der Erfindung

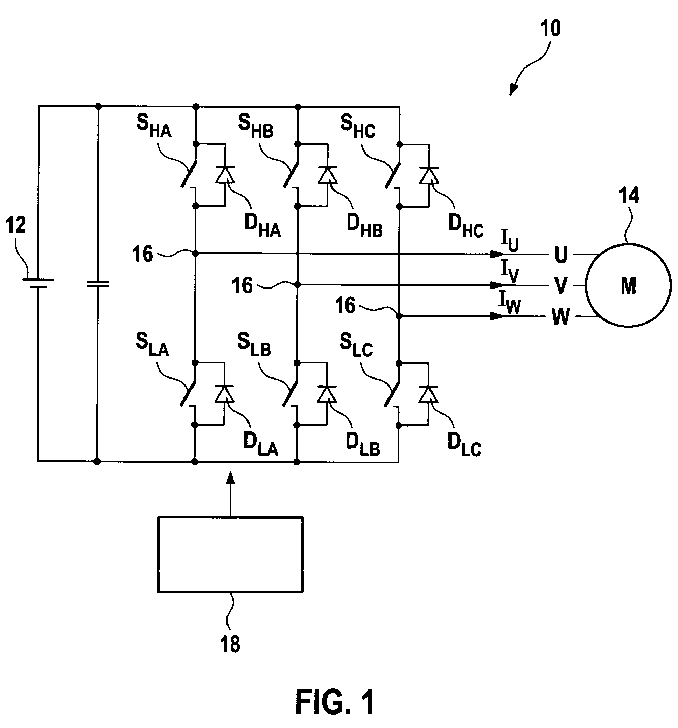

In Figur 1 sind die Schalter S entsprechend der Phase U, V, W, die sie bereitstellen und entsprechend der Zuordnung zu einem hohen Potenzial der Gleichspannungsquelle 12 oder einem niedrigen Potenzial der Gleichspannungsquelle 12 mit SHA, SLA, SHB, SLB, SHC, SLC bezeichnet. Entsprechend sind die Freilaufdioden bezeichnet mit DHA, DLA, DHB, DLB, DHC, DLC.

Durch wechselndes Öffnen und Schließen der Schalter S wird zwischen den Phasenleitern U, V, W jeweils eine Ansteuerspannung angelegt, sodass sich entsprechend jeweils ein Phasenstrom IU, IV, IW einstellt, der die elektrische Maschine 14 antreibt. Der Wechselrichter 10 ist vorzugsweise mittels Halbleiterschaltern ausgebildet. Die Schalter des Wechselrichters werden mittels einer schematisch dargestellten Steuereinheit 18 wechselnd geöffnet und geschlossen, um die Phasenspannungen mit einem bestimmten Verlauf bereitzustellen, und einen Spannungsraumzeiger bereitzustellen und die elektrische Maschine 14 entsprechend mit den Phasenströmen IU, IV, IW zu bestromen. Dabei wird der Spannungszeiger durch den Wechselrichter 10 bereitgestellt, woraufhin sich der Stromraumzeiger in Abhängigkeit der angesteuerten Last entsprechend einstellt.

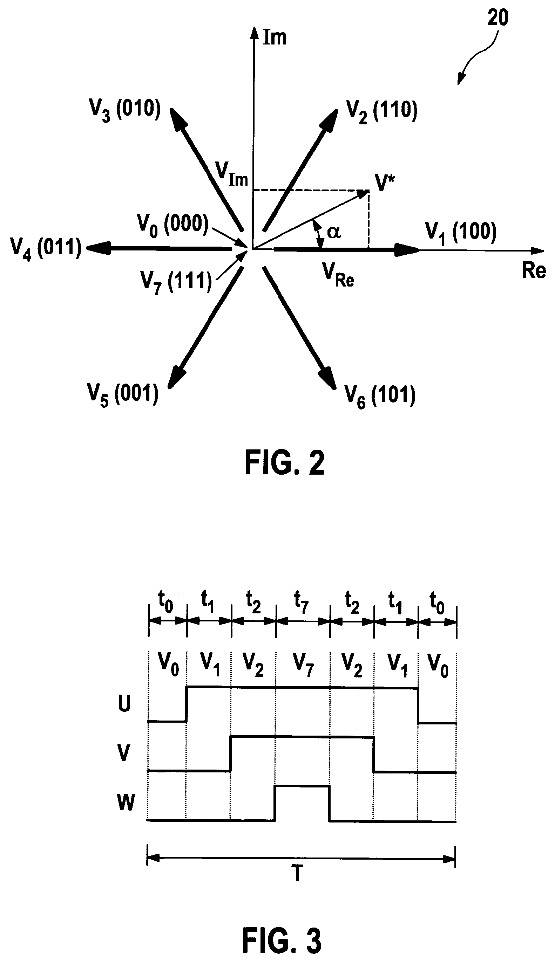

In Figur 2 ist ein komplexes Zeigerdiagramm zur Erläuterung der Raumzeigermodulation zum Ansteuern des Drehstromverbrauchers 14 beziehungsweise der elektrischen Maschine 14 dargestellt und allgemein mit 20 bezeichnet.

In dem Zeigerdiagramm 20 ist ein Spannungszeiger V* mit einem Ansteuerungswinkel Alpha der elektrischen Maschine 14 dargestellt. In dem Zeigerdiagramm 20 sind ferner sechs Grundspannungszeiger V1, V2, V3, V4, V5, V6 dargestellt, die sich ergeben, wenn einzelne oder zwei der Schalter S des Wechselrichters 10 geschlossen werden und die elektrische Maschine entsprechend angesteuert wird. Um den Spannungszeiger V* mit maximaler Länge einzustellen, der in diesem Beispiel den Ansteuerwinkel Alpha zwischen den Grundspannungszeigern V1 und V2 aufweist, wird dieser durch abwechselndes Ansteuern des Wechselrichters 10 entsprechend dem Grundspannungszeiger V1 und dem Grundspannungszeiger V2 realisiert. Die beiden Grundspannungszeiger V1, V2 werden abwechselnd eingestellt mit einer vordefinierten Schaltfrequenz, sodass sich bei gleicher Einschaltdauer der Grundspannungszeiger V1, V2 der Spannungszeiger V* mit einem Phasenwinkel von 30° ergibt. Sofern ein Spannungszeiger V* mit einem größeren Ansteuerungswinkel Alpha eingestellt werden muss, wird entsprechend die Einschaltdauer des Grundspannungszeigers V2 verlängert und die Einschaltdauer des Grundspannungszeigers V1 verkürzt. Somit lässt sich durch getaktetes Ansteuern der Schalter S des Wechselrichters 10 der Spannungsraumzeiger V* mit einem beliebigen Ansteuerwinkel Alpha realisieren.

Sofern der Spannungszeiger V*, wie in dem in Figur 2 dargestellten Fall mit einem geringeren Betrag (geringere Länge) als die Grundspannungsraumzeiger V1, V2 eingestellt werden soll, wird entsprechend ein Nullspannungszeiger V0, V7 eingestellt, bei dem die Schalter SHA, SHB, SHC auf der oberen Seite bzw. SLA, SLB, SLC auf der unteren Seite des Wechselrichters 10 geöffnet sind. Die jeweils anderen der Schalter S sind entsprechend geschlossen. Entsprechend kann der Spannungszeiger V* durch eine Kombination der Grundspannungsraumzeiger V1 und V2 und einem der Nullspannungszeiger V0, V7 realisiert werden.

Zur Bestromung des elektrischen Verbrauchers 14 beziehungsweise der elektrischen Maschine 14 wird der Spannungsraumzeiger V* bereitgestellt, indem die unterschiedlichen Grundspannungsraumzeiger V1-V6 und die Nullspannungszeiger V0, V7 in einer schnellen Abfolge hintereinander eingestellt werden. Dadurch werden die unterschiedlichen Schalter S und die unterschiedlichen Freilaufdioden D des Wechselrichters 10 bei einem entsprechend schnell rotierenden Spannungsraumzeigers V* gleichmäßig belastet, insbesondere phasig gleichmäßiger belastet. Sofern die Rotationsfrequenz des Spannungsraumzeigers V* sehr gering oder null ist, zum Beispiel bei geringen Drehzahlen der elektrischen Maschine 10, werden die entsprechenden Schalter S und die Freilaufdioden D des Wechselrichters 10 einer Phase U, V, W über einen langen Zeitraum belastet, sodass eine Überlastung der entsprechenden Schalter S und der Freilaufdioden D auftreten kann und die Schalter S und die Freilaufdioden D des Wechselrichters 10 im Allgemeinen ungleichmäßig, insbesondere phasig ungleichmäßig belastet werden. Um bei eine Überlastung einzelner der Schalter S und Freilaufdioden D zu verhindern, müssen Maßnahmen ergriffen werden, um die Belastung auf unterschiedliche der Schalter S und der Freilaufdioden D zu verteilen.

In Figur 3 sind Verläufe der Phasenspannungen der drei Phasen U, V, W innerhalb einer pulsweiten Modulationsperiode T dargestellt, um die Grundspannungsraumzeiger V0, V1, V2, V7 nacheinander einzustellen. Innerhalb der pulsweiten Modulationsperiode T kann eine Einschaltdauer t0, t1, t2, t7 der einzelnen Grundspannungsraumzeiger V0, V1, V2, V7 variiert werden, um den Spannungsraumzeiger V* präzise einstellen zu können. Aufgrund der Trägheit der steuerbaren Schalter muss ein minimaler zeitlicher Abstand zwischen zwei Schaltzeitpunkten eines Schalters eingehalten werden. Dieser minimale Abstand ist sowohl zwischen Einschaltzeiten als auch zwischen Ausschaltzeiten notwendig. Durch diese Trägheit der Bauelemente verringert sich der einstellbare Betriebsbereich und ein maximaler Ansteuerungsgrad, der berechnet wird durch die Formel:

$$A\_Max = (T - 2 * t\_Min) / T$$

wobei T die Pulsweitenmodulationsperiodendauer und t_Min der minimale Abstand zwischen zwei Schaltzeitpunkten ist. Sofern eine Schaltfolge angefordert wird, dessen Dauer kleiner ist als 2 * t_Min, kann dieser durch den Wechselrichter 10 nicht eingestellt werden. Um einen entsprechenden Spannungsraumzeiger V* dennoch einstellen zu können, müssen die Spannungsverläufe bzw. die Schaltsequenzen variiert werden, so dass der zeitliche Abstand zwischen den Schaltzuständen größer ist als 2 * t_Min.

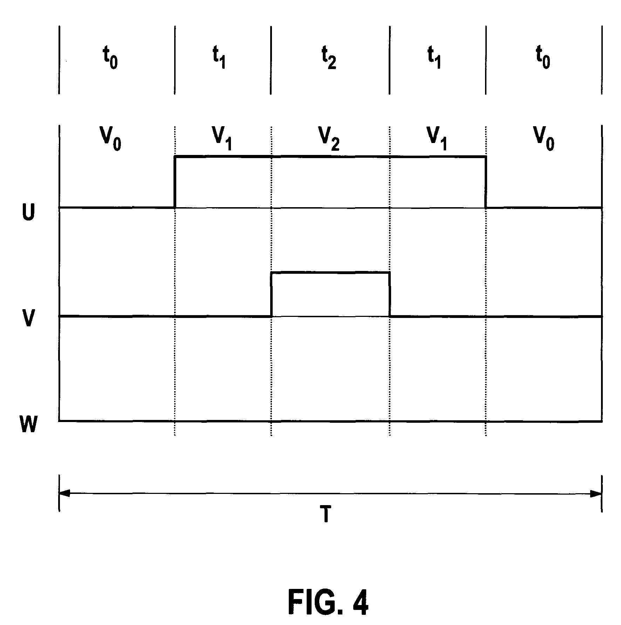

Um den Betriebsbereich zu erweitern, ist es bekannt, die Einschaltdauern $t_0$ - $t_7$ der steuerbaren Schalter S zu verkürzen und dabei einen der steuerbaren Schalter über die gesamte Pulsweitenmodulationsperiode T nicht einzuschalten bzw. ausgeschaltet zu lassen, wie es in Fig. 4 gezeigt ist.

In Fig. 4 sind schematisch drei Spannungsverläufe der Phasen U, V, W innerhalb einer Pulsweitenmodulationsperiode T dargestellt, die eine Schaltsequenz der Schaltzustände V0-V7 bilden und einen Spannungsraumzeiger V* einstellen, der dem Spannungsraumzeiger V* entspricht, der durch die Schaltsequenz aus Fig. 3 gebildet wird. Um die Schaltsequenz aus Fig. 4 zu erzielen, werden die Einschaltzeiten der steuerbaren Schalter SHA, SHB, also die Strangspannungen der Phasen U, V um die Einschaltzeit t7 verkürzt und die Strangspannung der Phase W über die gesamte Pulsweitenmodulationsperiode T auf Null eingestellt. Mit anderen Worten werden alle Einschaltdauern der steuerbaren Schalter S um die Einschaltzeit t7 des am kürzesten eingeschalteten Schalters SHC verkürzt. Dadurch wird lediglich die Einschaltzeit des Nullspannungszeigers V7 auf Null verkürzt und der Nullspannungszeiger V0 um die entsprechende Einschaltzeit t7 verlängert. Da in diesem Fall lediglich die Nullspannungszeiten V0, V7 variiert werden, wird durch die Schaltsequenz aus Fig. 4 ein identischer Spannungsraumzeiger V* eingestellt, wie er durch die Schaltsequenz aus Fig. 3 eingestellt wird. Sofern die Einschaltzeit t7 des Nullspannungszeigers V7 aus Fig. 3 den minimal zulässigen Wert erreicht, kann dadurch ein entsprechender Spannungsraumzeiger V* eingestellt werden, ohne dass ein unzulässig verkürzter Puls eingestellt wird.

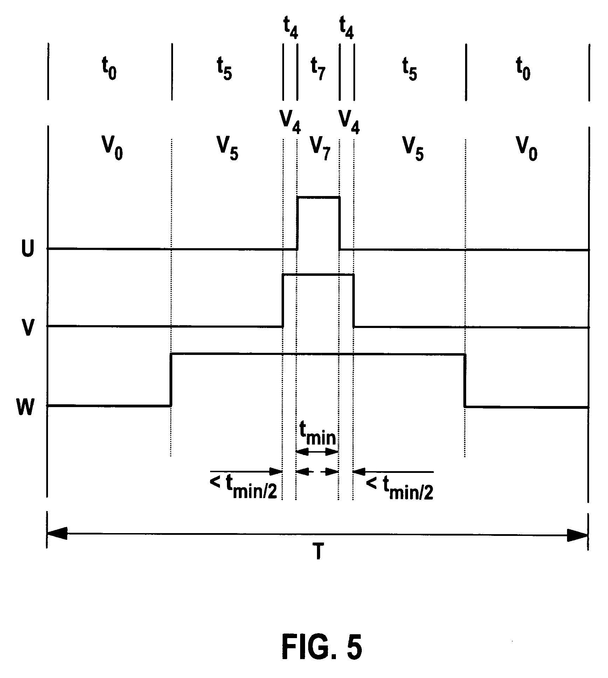

In Fig. 5 sind drei Strangspannungen der Phasenstränge U, V, W schematisch dargestellt, die eine Schaltsequenz mit zwei minimal möglichen Abständen von zwei Schaltzuständen zeigt. Bei der Schaltsequenz aus Fig. 5 ist die Dauer der Einschaltzeit t4 jeweils t_Min/2 und die Dauer der Einschaltzeit t7 genau t_Min. Sofern für diese Schaltsequenz die Einschaltdauern der steuerbaren Schalter S um die kürzeste Einschaltzeit t7 verkürzt wird, würde ein Spannungspuls der Phase V eingestellt, der den minimal möglichen Abstand von zwei Schaltvorgängen eines Schalters erreicht. Sofern die Einschaltzeit t4 weiter reduziert wird, wird die minimale Einschaltzeit t_Min unterschritten, so dass das Verfahren zur Erweiterung des Bereichs durch Verkürzung der Einschaltzeit, das in Fig. 4 erläutert ist, hier nicht anwendbar ist.

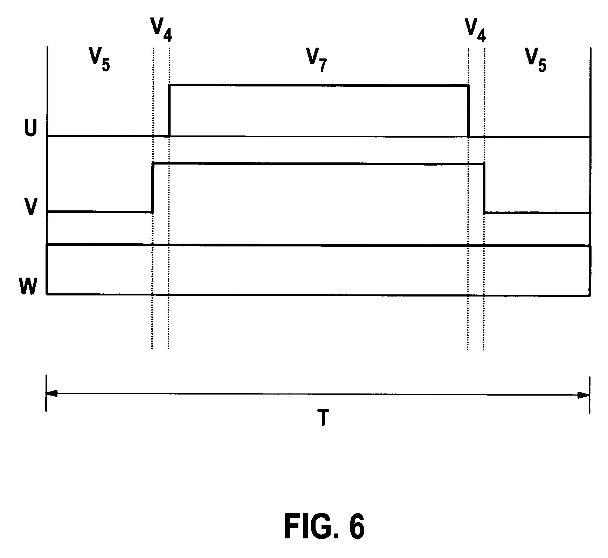

In Fig. 6 sind drei Strangspannungen der Phasen U, V, W schematisch dargestellt, die denselben Spannungsraumzeiger V* bereitstellen wie die Schaltsequenz aus Fig. 5. Um die unzulässige Verkürzung eines Spannungspulses zu vermeiden, wurde ausgehend von den Spannungsverläufen aus Fig. 5 die Einschaltzeit der steuerbaren Schalter S um jeweils eine identische Zeitdauer verlängert, so dass die Einschaltdauer des steuerbaren Schalters SHC der Phase W auf die gesamte Pulsweitenmodulationsperiode verlängert wird. Mit anderen Worten wird die Dauer t0 des Schaltzustands V0 auf Null reduziert und die Einschaltdauern der steuerbaren Schalter SHA und SHB um 2* t0 verlängert. Mit anderen Worten wird die Einschaltzeit des Nullspannungszeigers V7 auf Kosten des Nullspannungszeigers V0 verlängert. Somit wird für die gesamte Pulsweitenmodulationsperiode T lediglich einer der Nullspannungszeiger V0, V7 verwendet. Da die Nullspannungszeiger V0, V7 keinen Einfluss auf den bereitgestellten Spannungsraumzeiger V* haben, wird der Spannungsraumzeiger V* nicht beeinflusst. Durch diese Verlängerung der Einschaltzeiten kann der Betriebsbereich des Wechselrichters 10 erweitert werden und vermieden werden, dass ein unzulässig kurzer Spannungspuls eingestellt wird.

Dieses Verfahren der Verlängerung der Einschaltdauern der steuerbaren Schalter S wird vorzugsweise dann verwendet, wenn das Tastverhältnis des steuerbaren Schalters S mit der mittleren Einschaltdauer der Schalter S innerhalb einer Pulsweitenmodulationsperiode T kleiner als 50 % ist. Mit anderen Worten, also wenn zwei der Schalter S ein Tastverhältnis von kleiner als 50 % aufweisen. Sofern das Tastverhältnis des Schalters S mit der mittleren Einschaltdauer der Schalter S innerhalb einer Pulsweitenmodulationsperiode T größer als 50 % ist, also wenn zwei der Schalter S ein Tastverhältnis größer als 50% aufweisen, werden vorzugsweise die Einschaltdauern der steuerbaren Schalter S verkürzt, wie es in Fig. 4 gezeigt ist. Dadurch können je nach Schaltsequenz die Einschaltdauern entsprechend variiert werden, um den Betriebsbereich des Wechselrichters 10 zu vergrößern, ohne dass unzulässig kurze Spannungspulse eingestellt werden.

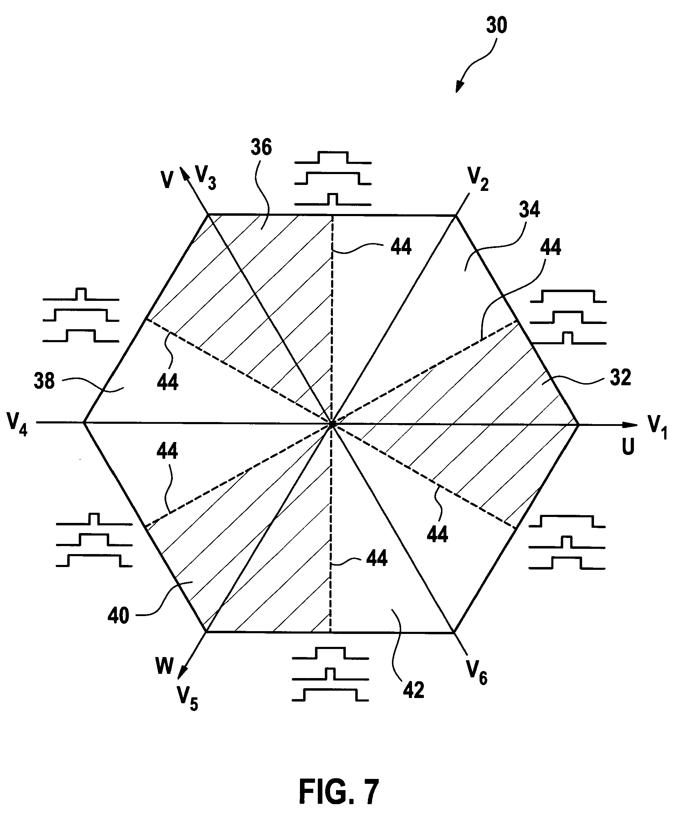

In Fig. 7 ist ein komplexes Zeigerdiagramm mit den drei Phasenspannungen U, V, W zur Ansteuerung eines elektrischen Verbrauchers schematisch dargestellt und allgemein mit 30 bezeichnet.

Die drei Phasenspannungen U, V, W spannen mit ihrem positiven und ihrem negativen Spannungszeiger ein Sechseck auf, wobei die positiven Phasenspannungen U, V, W den Grundspannungszeigern V1, V3, V5 und die jeweils negativen Enden der Phasenspannungen U, V, W den Grundspannungszeigern V2, V4, V6 aus Fig. 2 entsprechen.

Das komplexe Zeigerdiagramm 30 ist in sechs unterschiedliche Ansteuerungsbereiche 32, 34, 36, 38, 40, 42 eingeteilt, die jeweils um einen der Grundspannungszeiger V1-V6 gebildet sind. In den Ansteuerbereichen 32, 36, 40, die um die positiven Phasenspannungen U, V, W bzw. um die Grundspannungsraumzeiger V1, V3, V5 gebildet sind, ist die Einschaltzeit eines der steuerbaren Schalter bzw. eines der Tastverhältnisse der steuerbaren Schalter S sehr kurz, wohingegen die beiden anderen Einschaltzeiten bzw. Tastverhältnisse relativ lang sind. In den Ansteuerbereichen 34, 38, 42, die um die negativen Phasenspannungen U, V, W bzw. um die Grundspannungsraumzeiger V2, V4, V6 gebildet sind, ist eine Einschaltzeit eines steuerbaren Schalters S bzw. das Tastverhältnis eines der steuerbaren Schalter S relativ lang, wohingegen die beiden anderen Einschaltzeiten bzw. Tastverhältnisse relativ kurz sind.

Wie oben bereits erwähnt, ist es nachteilig, die Einschaltdauern der steuerbaren Schalter S zu verkürzen, sofern die Einschaltdauern von zwei der steuerbaren Schalter S relativ kurz sind. Ferner ist es nachteilig, die Einschaltdauern der Schalter S zu verlängern, sofern die Einschaltdauern von zwei der steuerbaren Schalter S relativ lang sind. In diesem Fall würden unter Umständen Spannungspulse eingestellt werden, die unterhalb der zulässigen Pulsbreite liegen. Mit anderen Worten ist es vorteilhaft, wenn die Einschaltdauern der steuerbaren Schalter S verlängert werden, sofern zwei der steuerbaren Schalter S eine relativ kurze Einschaltdauer bzw. ein kleines Tastverhältnis aufweisen und die Einschaltdauern der steuerbaren Schalter S zu verkürzen, sofern zwei der steuerbaren Schalter eine Einschaltdauer S bzw. ein großes Tastverhältnis aufweisen.

Daher werden die Einschaltdauern der steuerbaren Schalter S für Spannungsraumzeiger V* in den Ansteuerbereich 32, 36, 40 verlängert und in den Ansteuerbereichen 34, 38, 42 verkürzt.

Die jeweiligen Ansteuerbereiche 32-42 sind durch jeweils einen Schwellenwert 44 voneinander getrennt. Der Schwellenwert 44 bildet eine Grenze, bei der das Tastverhältnis des steuerbaren Schalters mit der mittleren Einschaltdauer der Schalter S innerhalb einer Pulsweitenmodulationsperiode T 50 % beträgt. Somit wird zwischen den Ansteuerverfahren also der Verkürzung oder Verlängerung der Einschaltdauern der Schalter S umgeschaltet, sofern das mittlere der Tastverhältnisse kleiner oder größer als 50 % ist.

Sofern das mittlere der Tastverhältnisse exakt 50 % beträgt, wird vorzugsweise willkürlich eines der beiden Steuerverfahren ausgewählt.

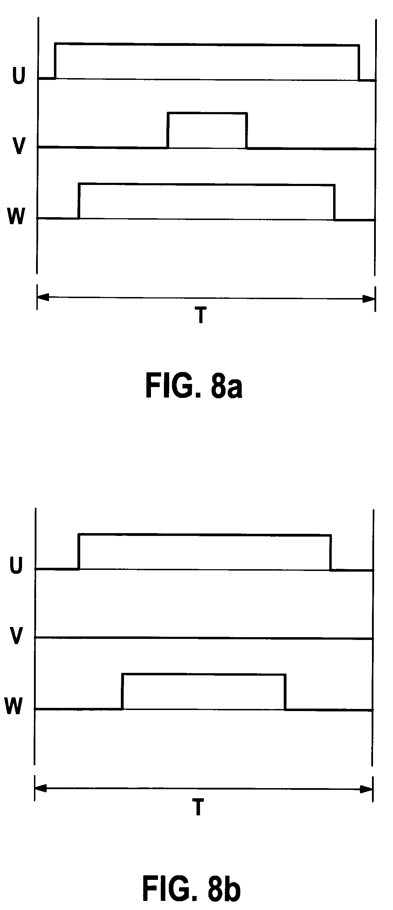

In Fig. 8a, b ist eine Ansteuersequenz schematisch dargestellt, bei der das mittlere der Tastverhältnisse größer als 50 % ist und die Einschaltdauern der steuerbaren Schalter S bzw. das Tastverhältnis der steuerbaren Schalter S entsprechend verkürzt wird. Diese in Fig. 8a dargestellte Ansteuersequenz entspricht den Ansteuerbereichen 34, 38, 42, so dass die Einschaltdauern der Schalter S bzw. die Tastverhältnisse um die Einschaltdauer des Schalters SHB, der die kürzeste Einschaltdauer aufweist, verkürzt werden. Dadurch entsteht eine Ansteuersequenz, wie sie in Fig. 8b gezeigt ist, wobei die Strangspannungen der Phasen U, W entsprechend verkürzt sind und die Strangspannung der Phase V auf Null reduziert ist.

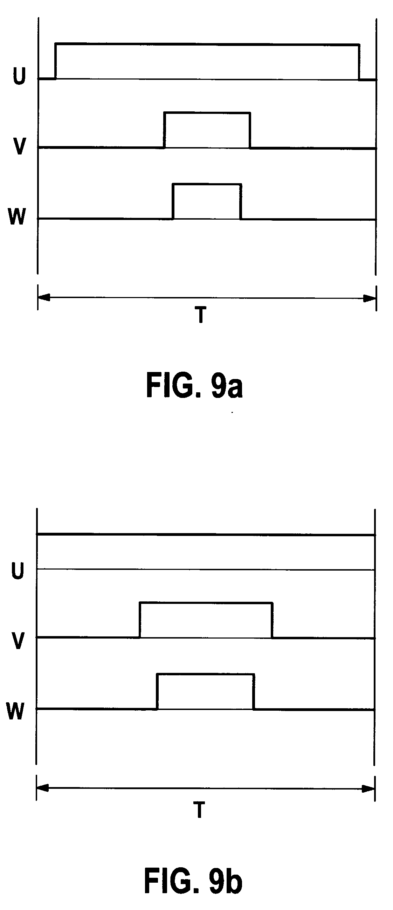

In Fig. 9a ist eine Ansteuersequenz gezeigt, bei der das mittlere der Tastverhältnisse kleiner als 50 % ist. Diese Ansteuersequenz entspricht somit einem der Ansteuerungsbereiche 32, 36, 40. Um unzulässig verkürzte Spannungspulse zu vermeiden, werden bei dieser Ansteuerungssequenz die Einschaltdauern der steuerbaren Schalter S verlängert, und zwar derart, dass der Schalter mit der längsten Einschaltdauer bzw. mit dem größten Tastverhältnis, in diesem Falle der steuerbare Schalter SHA der Phase U, derart verlängert wird, dass er über die gesamte Pulsweitenmodulationsperiode T eingeschaltet ist. Die Einschaltdauern der anderen beiden steuerbaren Schalter S werden entsprechend um dieselbe Zeitdauer verlängert. Durch diese Verlängerung der Einschaltdauern entsteht die Ansteuerungssequenz wie sie in Fig. 9b dargestellt ist.

In den Figuren 8a, b und 9a sind die Strangspannungen bzw. die Spannungspulse der Strangspannungen so ausgebildet, dass der Wechselrichter 10 zu Beginn und zum Ende jeder der Pulsweitenmodulationsperioden T mit einem Nullspannungszeiger V0, V7 angesteuert wird. In Fig. 9b beginnt durch die Verlängerung der Strangspannung U auf die gesamte Länge der Pulsweitenmodulationsperiode T mit dem Grundspannungsraumzeiger V1 und endet ebenfalls mit dem Grundspannungsraumzeiger V1. Um jede der Pulsweitenmodulationsperioden T mit einem Nullspannungszeiger V0, V7 beginnen und enden zu lassen, müssen die Strangspannungen V, W, bzw. die Spannungspulse der Strangspannungen V, W verändert werden, wie es im Weiteren näher erläutert ist.

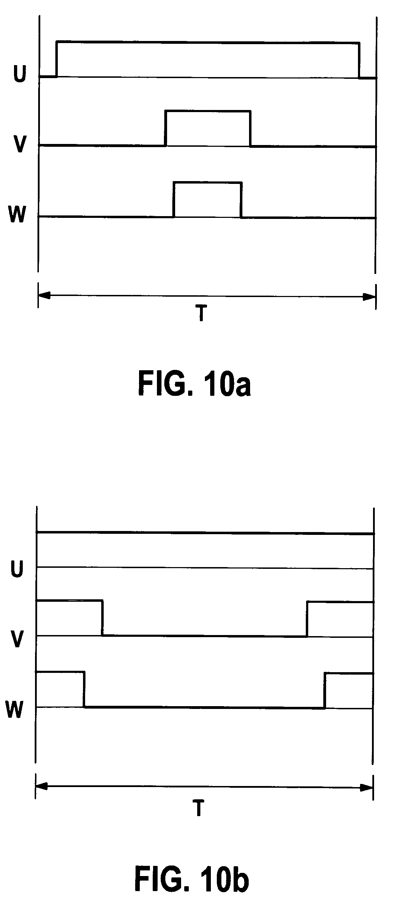

In Fig. 10a ist eine Ansteuersequenz gezeigt, die der Ansteuersequenz aus Fig. 9a entspricht. Wie bei dem Ausführungsbeispiel aus Fig. 9a werden in dieser Ansteuersituation die Spannungspulse der drei Strangspannungen U, V, W verlängert, so dass der Schalter mit der längsten Einschaltdauer bzw. mit dem größten Tastverhältnis, in diesem Falle der steuerbare Schalter SHA der Phase U, derart verlängert wird, dass er über die gesamte Pulsweitenmodulationsperiode T eingeschaltet ist. Die Einschaltdauern der anderen beiden steuerbaren Schalter S werden entsprechend um dieselbe Zeitdauer verlängert.

In Fig. 10b ist eine Variation der Spannungspulse der Strangspannungen V, W dargestellt. Dabei sind die Spannungspulse derart angeordnet, dass die Pulsweitenmodulationsperiode T jeweils mit einem Nullspannungszeiger V0, V7 beginnt und endet. Dabei werden die resultierenden verlängerten Spannungspulse der Strangspannungen V, W aufgeteilt und die so entstandenen Teilspannungspulse an den Anfang bzw. das Ende der Pulsweitenmodulationsperiode T verlagert.

Dadurch ist zu Beginn der Pulsweitenmodulationsperiode der Nullspannungszeiger V7 und zum Ende der Pulsweitenmodulationsperiode T ebenfalls der Nullspannungszeiger V7 geschaltet. Da prinzipiell lediglich die Nullspannungszeiger V0, V7 von der Mitte der Pulsweitenmodulationsperiode T an die Ränder verlagert sind, wird die Ansteuerung des elektrischen Verbrauchers 14 bzw. der Spannungsraumzeiger V* nicht beeinflusst.

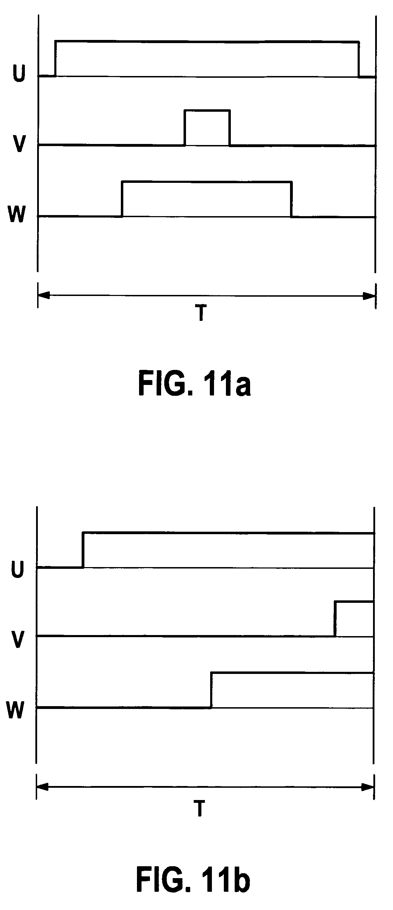

In Fig. 11a sind Strangspannungen der Phasen U, V, W dargestellt, wobei das mittlere der Tastverhältnisse 50 % beträgt. Diese Sequenz bildet einen Übergang von einem der Ansteuerbereiche 34, 38, 42 zu einem der Ansteuerungsbereiche 32, 36, 40. Diese Ansteuersequenz bildet somit einen Übergang zwischen einem Bereich, in dem einer der Schalter S über die gesamte Pulsweitenmodulationsperiode T geschlossen ist, zu einem Bereich, in dem einer der steuerbaren Schalter S über den gesamten Pulsweitenmodulationsperiodenbereich T geöffnet ist. Um in diesem Übergangsbereich unzulässige Verkürzungen der Spannungspulse zu vermeiden, werden die Einschaltpulse der drei Phasen U, V, W bzw. der steuerbaren Schalter S innerhalb der Pulsweitenmodulationsperiode T zeitlich nach hinten verschoben, so dass unzulässig verkürzte Spannungspulse vermieden werden. Eine derartige Verschiebung der Spannungspulse ist in Fig. 11b gezeigt.

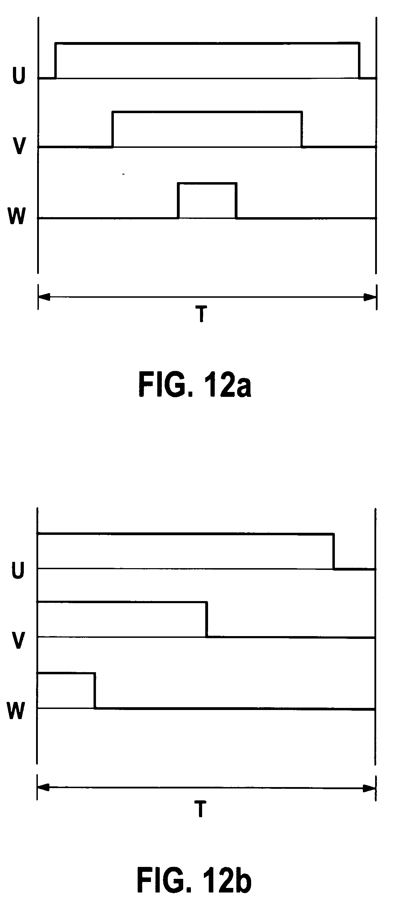

Im Gegensatz dazu werden die Spannungspulse bei einem Übergang von einem der Ansteuerungsbereiche 32, 36, 40 zu einem der Ansteuerungsbereiche 34, 38, 42, also von einer Verlängerung der Einschaltzeiten wie sie in Fig. 9a, b gezeigt sind, zu einer Verkürzung der Einschaltzeiten, wie sie in Fig. 8a, b gezeigt sind, innerhalb der Pulsweitenmodulationsperiode T zeitlich nach vorne verschoben bzw. an den Anfang der Pulsweitenmodulationsperiode T verlagert. Eine derartige Übergangsequenz ist in Fig. 12a gezeigt und eine Ansteuersequenz, bei der die entsprechenden Spannungspulse an den Anfang der Pulsweitenmodulationsperiode T verlagert sind, ist in Fig. 12b gezeigt.

Auf diese kann der einstellbare Betriebsbereich des Wechselrichters 10 erweitert werden und unzulässig verkürzte Spannungspulse vermieden werden.

Bei den Sequenzen aus Fig. 11b und 12b beginnt und endet die Pulsweitenmodulationsperiode T jeweils mit einem der Nullspannungszeiger V0, V7 und endet mit den jeweils anderen der Nullspannungszeiger V0, V7.

**Patentansprüche**

1. Verfahren zum Ansteuern eines Wechselrichters (10) mittels Raumzeigerpulsweitenmodulation, insbesondere zum Ansteuern einer elektrischen Maschine (14), wobei der Wechselrichter (10) eine Mehrzahl von steuerbaren Schaltern (S) aufweist und dazu ausgebildet ist, eine mehrphasige elektrische Spannung (U, V, W) in Form eines Spannungsraumzeigers (V*) bereitzustellen, wobei die steuerbaren Schalter S derart angesteuert werden, dass unterschiedliche Einschaltdauern der Schalter (S) eingestellt und eine Mehrzahl von aufeinanderfolgenden unterschiedlichen Schaltzuständen (V0-V7) der Schalter (S) eingerichtet werden, um den Spannungsraumzeiger (V*) bereitzustellen, **dadurch gekennzeichnet, dass** die Einschaltdauern der Schalter (S) während einer Pulsweitenmodulationsperiode (T) verlängert werden, sofern eine Einschaltdauer eines der Schalter (S) während der Pulsweitenmodulationsperiode (T) einen vordefinierten Schwellenwert (44) unterschreitet.

2. Verfahren nach Anspruch 1, wobei die Einschaltdauer des Schalters (S) verwendet wird, der eine mittlere Einschaltdauer der Schalter (S) aufweist.

3. Verfahren nach Anspruch 1 oder 2, wobei die Einschaltdauern der eingeschalteten Schalter (S) um eine jeweils identische Zeitdauer verlängert werden.

4. Verfahren nach einem der Ansprüche 1 bis 3, wobei die Einschaltdauer des Schalters (S) mit der längsten Einschaltdauer innerhalb der Pulsweitenmodulationsperiode (T) derart verlängert wird, dass der Schalter (S) über die gesamte Pulsweitenmodulationsperiode (T) eingeschaltet ist.

5. Verfahren nach einem der Ansprüche 1 bis 3, wobei die Zeitdauer, um die die Einschaltdauern der Schalter (S) verlängert werden, der Differenz zwischen der Pulsweitenmodulationsperiodendauer (T) und der Einschaltdauer des Schalters (S) mit der längsten Einschaltdauer entspricht.

6. Verfahren nach einem der Ansprüche 1 bis 4, wobei die Einschaltdauer des Schalters (S) ein Tastverhältnis des Schalters (S) ist und der vordefinierte Schwellenwert (44) ein Tastverhältnis von 50 % ist.

7. Verfahren nach einem der Ansprüche 1 bis 6, wobei die Einschalterdauern der Schalter (S) verkürzt wird, sofern die Einschaltdauer des Schalters (S) einen zweiten vordefinierten Schwellenwert (44) überschreitet.

8. Verfahren nach Anspruch 7, wobei die Einschaltdauern der Schalter (S) um jeweils eine identische Zeitdauer derart verkürzt werden, dass der Schalter (S) mit der kürzesten Einschaltdauer über die gesamte Pulsweitenmodulationsperiode (T) geöffnet ist.

9. Verfahren nach einem der Ansprüche 1 bis 8, wobei die jeweiligen Einschaltpulse der Schalter (S) innerhalb der Pulsweitenmodulationsperiode (T) verschoben werden, sofern die Einschaltdauer des Schalters (S) einem vordefinierten Wertebereich (44), zwischen dem ersten und dem zweiten Schwellenwert (44) entspricht.

10. Verfahren nach Anspruch 9, wobei der erste und der zweite Schwellenwert (44) identisch sind.

11. Verfahren nach Anspruch 9 oder 10, wobei die Einschaltpulse der Schalter (S) an ein Ende der Pulsweitenmodulationsperiode (T) verschoben werden, sofern die Einschaltdauer von einem Wert größer als der erste Schwellenwert (44) zu einem Wert kleiner als der zweite Schwellenwert (44) geändert wird.

12. Verfahren nach Anspruch 10 oder 11, wobei die Einschaltpulse der Schalter (S) an einen Anfang der Pulsweitenmodulationsperiode (T) verschoben werden, sofern die Einschaltdauer des Schalters (S) von einem Wert kleiner als der zweite Schwellenwert (44) zu einem Wert größer als der zweite Schwellenwert (44) verändert werden.

13. Verfahren nach Anspruch 1 bis 10, wobei die Einschaltpulse der jeweiligen Schalter (S) geteilt werden und die geteilten Einschaltpulse jeweils an den Anfang und an das Ende der Pulsweitenmodulationsperiode (T) verschoben werden.

14. Vorrichtung (18) zum Ansteuern eines Wechselrichters (10) mittels Raumzeigerpulsweitenmodulation, insbesondere zum Ansteuern einer elektrischen Maschine (14), wobei der Wechselrichter (10) eine Mehrzahl von steuerbaren Schaltern (S) aufweist, die dazu ausgebildet sind, eine mehrphasige elektrische Spannung (U, V, W) in Form eines Spannungsraumzeigers (V*) bereitzustellen, mit einem Steuergerät, das dazu ausgebildet ist, die steuerbaren Schalter (S) derart anzusteuern, dass unterschiedliche Einschaltdauern der Schalter (S) eingestellt werden und der Wechselrichter (10) eine Mehrzahl von aufeinanderfolgenden unterschiedlichen Schaltzuständen (V0, V7) der Schalter (S) annimmt, um den Spannungsraumzeiger (V*) bereitzustellen, **dadurch gekennzeichnet, dass** das Steuergerät (18) dazu ausgebildet ist, die Einschaltdauern der Schalter (S) während einer Pulsweitenmodulationsperiode (T) zu verlängern, sofern eine Einschaltdauer eines der Schalter (S) während der Pulsweitenmodulationsperiode (T) einen vordefinierten Schwellenwert (44) unterschreitet.

**15.** Kraftfahrzeug-Antriebsstrang mit wenigstens einer elektrischen Maschine (14) zum Bereitstellen von Antriebsleistung, einem Wechselrichter (10) zum Ansteuern der elektrischen Maschine (14) und mit einer Vorrichtung (18) zum Ansteuern des Wechselrichters (10) nach Anspruch 14.

**Claims**

**1.** Method for driving an inverter (10) by means of space vector pulse width modulation, in particular for driving an electrical machine (14), wherein the inverter (10) comprises a plurality of controllable switches (S) and is designed to provide a polyphase elecrical voltage (U, V, W) in the form of a voltage space vector (V*), wherein the controllable -switches S are driven in such a way that different switched-on durations of the switches (S) are set and a plurality of successive different switching states (VO-V7) of the switches (S) are set up in order to provide the voltage space vectors (V*), **characterized in that** the switched-on durations of the switches (S) are lengthened during a pulse width modulation period (T) if a switched-on duration of one of the switches (S) falls below a predefined threshold value (44) during the pulse width modulation period (T).

**2.** Method according to claim 1, wherein the switched-on duration of the switch (S) which has an average switched-on duration of the switches (S) is used.

**3.** Method according to claim 1 or 2, wherein the switched-on durations of the switched-on switches (S) are lengthened by an identical time duration in each case.

**4.** Method according to any of claims 1 to 3, wherein the switched-on duration of the switch (S) having the longest switched-on duration within the pulse width modulation period (T) is lengthened in such a way that the switch (S) is switched on over the entire pulse width modulation period (T).

**5.** Method according to any of claims 1 to 3, wherein the time duration by which the switched-on durations of the switches (S) are lengthened corresponds to the difference between the pulse width modulation period duration (T) and the switched-on duration of the switch (S) having the longest switched-on duration.

**6.** Method according to any of claims 1 to 4, wherein the switched-on duration of the switch (S) is a duty ratio of the switch (S) and the predefined threshold value (44) is a duty ratio of 50%.

**7.** Method according to any of claims 1 to 6, wherein the switched-on durations of the switches (S) are shortened if the switched-on duration of the switch (S) exceeds a second predefined threshold value (44).

**8.** Method according to claim 7, wherein the switched-on duration of the switches (S) are shortened by an identical time duration in each case in such a way that the switch (S) having the shortest switched-on duration is open over the entire pulse width modulation period (T) .

**9.** Method according to any of claims 1 to 8, wherein the respective switch-on pulses of the switches (S) are shifted within the pulse width modulation period (T) if the switched-on duration of the switch (S) corresponds to a predefined value range (44), between the first and second threshold values (44).

**10.** Method according to claim 9, wherein the first and second threshold values (44) are identical.

**11.** Method according to claim 9 or 10, wherein the switch-on pulses of the switches (S) are shifted to an end of the pulse width modulation period (T) if the switched-on duration is changed from a value greater than the first threshold value (44) to a value less than the second threshold value (44).

**12.** Method according to claim 10 or 11, wherein the switch-on pulses of the switches (S) are shifted to a start of the pulse width modulation period (T) if the switched-on duration of the switch (S) is altered from a value less than the second threshold value (44) to a value greater than the second threshold value (44).

**13.** Method according to claims 1 to 10, wherein the switch-on pulses of the respective switches (S) are divided and the divided switch-on pulses are shifted in each case to the start and to the end of the pulse width modulation period (T).

**14.** Device (18) for driving an inverter (10) by means of space vector pulse width modulation, in particular for driving an electrical machine (14), wherein the inverter (10) comprises a plurality of controllable switches (S) and is designed to provide a polyphase elecrical voltage (U, V, W) in the form of a voltage space vector (V*), comprising a control unit designed to drive the controllable switches (S) in such a way that different switched-on durations of the switches (S) are set and the inverter (10) assumes a plurality of successive different switching states (V0, V7) of the switches (S) in order to provide the voltage space vector (V*), **characterized in that** the control unit (18) is designed to lengthen the switched-on durations of the switches (S) during a pulse width modulation period (T) if a switched-on duration of one of the switches (S) falls below a predefined threshold value (44) during the pulse width modulation period (T).

15. Motor vehicle drive train comprising at least one electrical machine (14) for providing drive power, an inverter (10) for driving the electrical machine (14), and comprising a device (18) for driving the inverter (10) according to claim 14.

**Revendications**

1. Procédé d'excitation d'un onduleur (10) au moyen de la modulation d'impulsions en largeur du vecteur d'espace, notamment d'excitation d'une machine électrique (14), l'onduleur (10) possédant une pluralité de commutateurs (S) commandables et étant configuré pour fournir une tension électrique multiphasée (U, V, W) sous la forme d'un vecteur d'espace de tension (V*), les commutateurs (S) commandables étant excités de telle sorte que des durées de mise en circuit différentes des commutateurs (S) sont réglées et une pluralité d'états de commutation (VO-V7) successifs différents des commutateurs (S) est établie en vue de fournir le vecteur d'espace de tension (V*), **caractérisé en ce que** les durées de mise en circuit des commutateurs (S) sont prolongées pendant une période de modulation d'impulsions en largeur (T) dans la mesure où une durée de mise en circuit de l'un des commutateurs (S) devient inférieure à une valeur de seuil (44) prédéfinie pendant la période de modulation d'impulsions en largeur (T).

2. Procédé selon la revendication 1, selon lequel la durée de mise en circuit utilisée est celle du commutateur (S) qui présente une durée de mise en circuit moyenne du commutateur (S).

3. Procédé selon la revendication 1 ou 2, selon lequel les durées de mise en circuit des commutateurs (S) mis en circuit sont prolongées d'une durée respectivement identique.

4. Procédé selon l'une des revendications 1 à 3, selon lequel la durée de mise en circuit du commutateur (S) ayant la durée de mise en circuit la plus longue à l'intérieur de la période de modulation d'impulsions en largeur (T) est prolongée de telle sorte que le commutateur (S) est mis en circuit sur toute la période de modulation d'impulsions en largeur (T).

5. Procédé selon l'une des revendications 1 à 3, selon lequel la durée par laquelle les durées de mise en circuit des commutateurs (S) sont prolongées correspond à la différence entre la durée de la période de modulation d'impulsions en largeur (T) et la durée de mise en circuit du commutateur (S) ayant la durée de mise en circuit la plus longue.

6. Procédé selon l'une des revendications 1 à 4, selon lequel la durée de mise en circuit du commutateur (S) est un rapport cyclique du commutateur (S) et la valeur de seuil (44) prédéfinie est un rapport cyclique de 50 %.

7. Procédé selon l'une des revendications 1 à 6, selon lequel les durées de mise en circuit des commutateurs (S) sont raccourcies dans la mesure où la durée de mise en circuit dû commutateur (S) devient supérieure à une deuxième valeur de seuil (44) prédéfinie.

8. Procédé selon la revendication 7, selon lequel les durées de mise en circuit des commutateurs (S) sont raccourcies respectivement d'une durée identique de telle sorte que le commutateur (S) ayant la durée de mise en circuit la plus courte est ouvert sur la totalité de la période de modulation d'impulsions en largeur (T).

9. Procédé selon l'une des revendications 1 à 8, selon lequel les impulsions de mise en circuit respectives des commutateurs (S) sont décalées à l'intérieur de la période de modulation d'impulsions en largeur (T) dans la mesure où la durée de mise en circuit du commutateur (S) correspond à une plage de valeurs (44) prédéfinie, entre la première et la deuxième valeur de seuil (44).

10. Procédé selon la revendication 9, selon lequel la première et la deuxième valeur de seuil (44) sont identiques.

11. Procédé selon la revendication 9 ou 10, selon lequel les impulsions de mise en circuit des commutateurs (S) sont décalées à une fin de la période de modulation d'impulsions en largeur (T) dans la mesure où la durée de mise en circuit est modifiée d'une valeur supérieure à la première valeur de seuil (44) en une valeur inférieure à la deuxième valeur de seuil (44).

12. Procédé selon la revendication 10 ou 11, selon lequel les impulsions de mise en circuit des commutateurs (S) sont décalées à un début de la période de modulation d'impulsions en largeur (T) dans la mesure où la durée de mise en circuit du commutateur (S) est modifiée d'une valeur inférieure à la deuxième valeur de seuil (44) en une valeur supérieure à la première valeur de seuil (44).

13. Procédé selon les revendications 1 à 10, selon lequel les impulsions de mise en circuit des commutateurs (S) respectifs sont partagées et les impulsions de mise en circuit partagées sont respectivement décalées au début et à la fin de la période de modulation d'impulsions en largeur (T).

**14.** Dispositif (18) destiné à exciter un onduleur (10) au moyen de la modulation d'impulsions en largeur du vecteur d'espace, notamment destiné à exciter une machine électrique (14), l'onduleur (10) possédant une pluralité de commutateurs (S) commandables qui sont configurés pour fournir une tension électrique multiphasée (U, V, W) sous la forme d'un vecteur d'espace de tension (V*), comprenant un contrôleur qui est configuré pour exciter les commutateurs (S) commandables de telle sorte que des durées de mise en circuit différentes des commutateurs (S) sont réglées et l'onduleur (10) adopte une pluralité d'états de commutation (VO-V7) successifs différents des commutateurs (S) en vue de fournir le vecteur d'espace de tension (V*), **caractérisé en ce que** le contrôleur (18) est configuré pour prolonger les durées de mise en circuit des commutateurs (S) pendant une période de modulation d'impulsions en largeur (T) dans la mesure où une durée de mise en circuit de l'un des commutateurs (S) devient inférieure à une valeur de seuil (44) prédéfinie pendant la période de modulation d'impulsions en largeur (T).

**15.** Chaîne cinématique de véhicule automobile comprenant au moins une machine électrique (14) destinée à fournir de la puissance motrice, un onduleur (10) destiné à exciter la machine électrique (14) et comprenant un dispositif (18) destiné à exciter l'onduleur (10) selon la revendication 14.

**FIG. 1**

FIG. 2

FIG. 3

FIG. 4

**FIG. 5**

FIG. 6

**FIG. 7**

**FIG. 8a**

**FIG. 8b**

**FIG. 9a**

**FIG. 9b**

FIG. 10a

FIG. 10b

FIG. 11a

FIG. 11b

FIG. 12a

FIG. 12b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008040144 A1